# DEMANDE DE BREVET EUROPEEN

(11) **EP 2 169 900 A1**
(43) Date de publication de la demande: **31.03.2010**
(21) Numéro de dépôt: 08305625.9
(22) Date de dépôt: 30.09.2008
(51) Int. Cl.: H04L 29/06

(54) **Régulateur de commandes destinées à une application sensible**

(71) Demandeur: GEMPLUS, 13420 Gémenos (FR)
(72) Inventeur: Amiel, Patrice, 13290, AIX-LES-MILLES (FR)

(57) **Abrégé**

La présente invention décrit un procédé et un module logiciel permettant de sécuriser les communications avec une application sensible, dont les échanges avec l'extérieur ont été délégués à une application dite d'interfaçage.

Pour ce faire, la présente invention décrit l'application de règles de sécurisation à tout ou partie des commandes destinées à cette application sensible.

## Description

L'invention concerne un régulateur de commandes destinées à une application sensible.

Plus particulièrement l'invention concerne un procédé destiné à centraliser, analyser et filtrer les commandes destinées à une application sensible, dans un dispositif multi-applicatif.

Aujourd'hui, un part croissante des dispositifs électroniques mobiles sont multi applicatifs.

Cette tendance se voit notamment dans l'univers des téléphone mobiles qui hébergent, en plus de l'application de téléphonie a proprement dit, des applications GPS, application de navigation internet, etc.

De la même façon, les dispositifs électroniques tels que les cartes à puces, sont de plus en plus sollicitées pour héberger des applications différentes. Il est aisé de trouver par exemple des cartes hébergeant une application bancaire, une application de fidélité, chacune appartenant à une entreprise différente, et souvent cohabitent également des applications embarquées par l'utilisateur de la carte lui-même.

Dans le contexte particulier du paiement mobile sans contact, dit NFC pour « Near Field Communication », un dispositif électronique tel qu'un téléphone, héberge un module de électronique de sécurité tel qu'une carte à puce. Pour permettre le paiement fans fil avec le téléphone, une application bancaire est hébergée par la carte à puce, et une application dit d'interface utilisateur, peut, elle être hébergée par le téléphone ou la carte à puce sous une forme, par exemple de Midlet. L'application bancaire est, le plus souvent une application certifiée, et protégée qui à un format d'entrées et sorties très figées. Ainsi, la méthode la plus courante pour « adapter » ce genre d'application sans les modifier (problème de re-certification) est de développer une application d'interface qui fait le relais avec le matériel (clavier, écran ...). Cette application d'interfaçage est l'emplacement privilégié pour installer les éléments de sécurité et de restrictions destinés à protéger l'usage de 1 application bancaire.

Ainsi la voie normale de communication vers l'application bancaire passe par l'application d'interface utilisateur.

Ce schéma s'applique a tous les domaines pour lesquels on souhaite dissocier une application de son interface de communication.

Le risque de se modèle est que un utilisateur ou un programme malveillant dialogue directement avec l'application bancaire, et ainsi contourne les éléments de sécurités installés dans l'application d'interfaçage.

Une solution peut consister en l'identification du client qui envoie une commande. Pour être efficace, ce contrôle d'identité doit se faire au niveau même de l'application, et s'adapter au dispositif électronique sur lequel l'application est implémentée. Dans le contexte actuel des applications bancaires certifiées, et donc difficilement modifiables cette solution ne permet pas de fournir une solution générique.

De même la sécurité des accès à l'application bancaire peut être déléguée au dispositif électronique qui héberge le module électronique de sécurité. Cette solution présente deux inconvénients majeurs :
- le dispositif électronique n'est pas un environnement sécurisé, et dans la majorité des cas il n'appartient pas à la société qui fournit l'application bancaire contenue dans le module électronique de sécurité. Nous sommes par exemple dans le cas ou le dispositif électronique est un téléphone portable, et le module de sécurité une carte a puce fournie par un opérateur bancaire.
- Cette solution ne permet pas de protéger l'application bancaire contre une action malveillante issue d'une autre application hébergée par le module électronique de sécurité. Cette application pourra être chargée dans le module à l'insu de l'utilisateur (cheval de Troie).

La présente invention se propose de sécuriser les accès à une application sensible hébergée dans un dispositif électronique, de manière interopérable et sans modifier l'application sensible.

Pour cela la présente invention est dans un premier temps un procédé de sécurisation des accès à une application sensible hébergée dans un dispositif électronique, dans un système comportant ladite application sensible, et une application d'interfaçage en charge des échanges entre ladite application sensible et le monde extérieur, ce procédé comporte les étapes de :
- centralisation de toutes les commandes destinées à l'application sensible
- analyse des commandes destinées à l'application sensible
- application, à chacune des commandes destinées à l'application sensible, d'au moins une règle de sécurisation

Selon un mode d'implémentation, l'étape de centralisation de toutes les commandes destinées à l'application sensible peut se faire au niveau du système d'exploitation du dispositif électronique.

De même l'étape d'analyse des dites commandes destinées à ladite application sensible peut se faire au niveau du système d'exploitation du dispositif électronique.

L'étape d'application, à chacune des commandes destinées à l'application sensible, d'au moins une règle de sécurisation peut également se faire au niveau du système d'exploitation du dispositif électronique.

Les règles de sécurisation selon l'invention peuvent par exemple consister en un rejet des commandes destinées à l'application sensible, venant de l'extérieur du dispositif électronique, ou par exemple consister en un rejet des commandes destinées à l'application sensible, ne venant pas d'une application faisant partie du même domaine de sécurité que l'application sensible.

Dans un mode d'implémentation les règles de sécurisation selon l'invention peuvent s'appuyer sur la nature de la commande destinée à l'application sensible, et ainsi rejeter les commandes dont la nature ne fait pas partie d'une liste enregistrée dans une mémoire du dispositif électronique, ou à contrario rejeter les commandes destinées à ladite application sensible dont la nature fait partie d'une liste enregistrée dans une mémoire dudit dispositif électronique.

Selon un mode de réalisation, les règles de sécurisation combinent plusieurs critères de rejets des commandes destinées à l'application sensible.

Dans un second temps, la présente invention est également un module logiciel enregistré dans une mémoire d'un dispositif électronique comportant au moins une mémoire et un processeur, destiné à protéger l'accès à une application sensible stockée dans une mémoire du dispositif électronique, ce module logiciel possède des moyens pour :
- centraliser toutes les commandes destinées à l'application sensible,
- analyser, avec l'aide du processeur du dispositif électronique, les commandes destinées à l'application sensible,
- lire au moins une règle de sécurisation dans une mémoire du dispositif électronique,
- appliquer, à chacune des commandes destinées à l'application sensible, au moins une règle de sécurisation

Ce module logiciel peut être intégré au système d'exploitation du dispositif électronique.

Le module logiciel selon l'invention pourra utiliser des règles de sécurisation, consistant par exemple en un rejet des commandes destinées à l'application sensible venant de l'extérieur du dispositif électronique, ou consistant en un rejet des dites commandes destinées à l'application sensible, ne venant pas d'une application faisant partie du même domaine de sécurité que ladite application sensible.

Dans un mode d'implémentation, le module logiciel selon l'invention pourra appliquer des règles de sécurisation basées sur la nature de la commande destinée à l'application sensible, et ainsi rejeter les commandes dont la nature ne fait pas partie d'une liste enregistrée dans une mémoire du dispositif électronique, ou à contrario rejeter les commandes destinées à ladite application sensible dont la nature fait partie d'une liste enregistrée dans une mémoire dudit dispositif électronique.

Le module logiciel selon l'invention pourra également combiner plusieurs critères de rejets des commandes destinées à l'application sensible.

D'autres caractéristiques et avantages de l'invention ressortiront clairement de la description qui en est faite ci-après, à titre indicatif et nullement limitatif, en référence aux dessins annexés dans lesquels :
- La figure 1 représente un exemple d'implémentation de l'invention dans un dispositif électronique comportant plusieurs applications, et une application sensible dont les accès doivent être protégés.
- La figure 2 illustre un exemple d'implémentation de l'invention dans un dispositif électronique comportant plusieurs applications, et deux applications sensibles indépendantes dont les accès doivent être protégés.
- La figure 3 représente le fonctionnement d'un dispositif comportant une application protégée par la présente invention dont les accès ont été délégués à une application d'interfaçage.
- La figure 4 représente le fonctionnement d'un dispositif comportant une application protégée par la présente invention dont les accès sont limités à certaines applications internes.

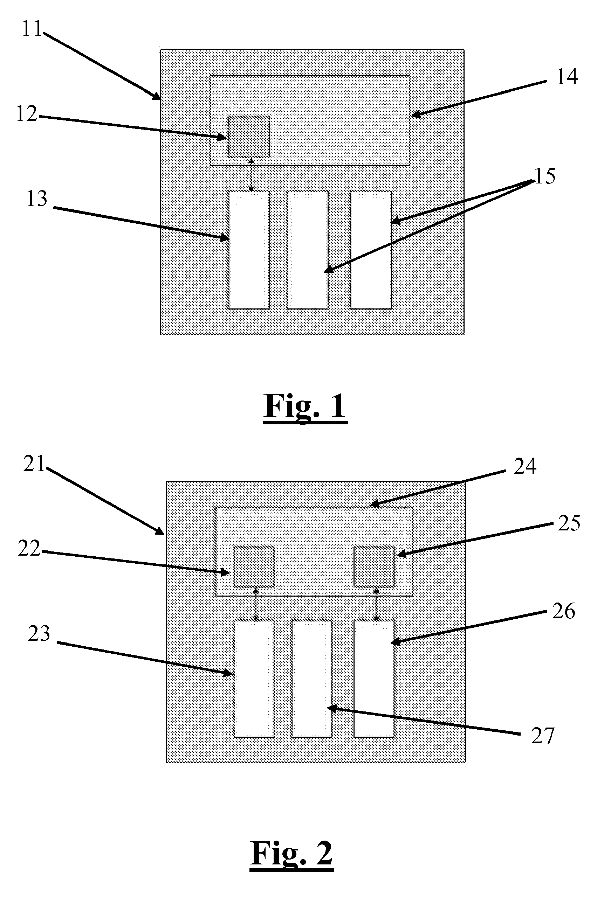

Dans la figure 1, un dispositif électronique, pouvant par exemple être une carte à puce, contient un système d'exploitation 14; et trois applications distinctes 13 et 15.

Dans cet exemple de réalisation l'application 13 est considérée comme sensible, et ses accès doivent être protégés. A cette fin, un ensemble de fonctionnalités 12 est ajouté au système d'exploitation 14 afin de centraliser et de réguler les tentatives d'accès à cette application.

La Figure 2 illustre une implémentation similaire à celle de la figure 1, avec le dispositif électronique 21, le système d'exploitation 24, et les applications 23, 26, 27. Toutefois ces exemple nous présente le cas ou 2 applications 23 et 26, contenues dans le dispositif 21 sont sensibles. Il est envisageable qu'un seul et unique ensemble de fonctionnalités 22 soient ajoutés et gèrent les accès a ces deux applications. Ce cas serait particulièrement adapté au cas où les deux applications ont des intérêts communs, par exemple ont été fournies par la même entreprise.

Toutefois, la figure 2 présente le cas ou ces deux applications sont indépendantes, et ont donc chacune leurs fonctionnalités additionnelles 22, 25 ajoutées au système d'exploitation. Cette implémentation particulière permet de garantir aux propriétaires de chacune des applications 23 et 26 que leur sécurité et la gestion des accès se fait dans la meilleures sécurité. De plus cela permet a chacune des applications d'avoir des politiques de gestions de leurs accès complètement différentes.

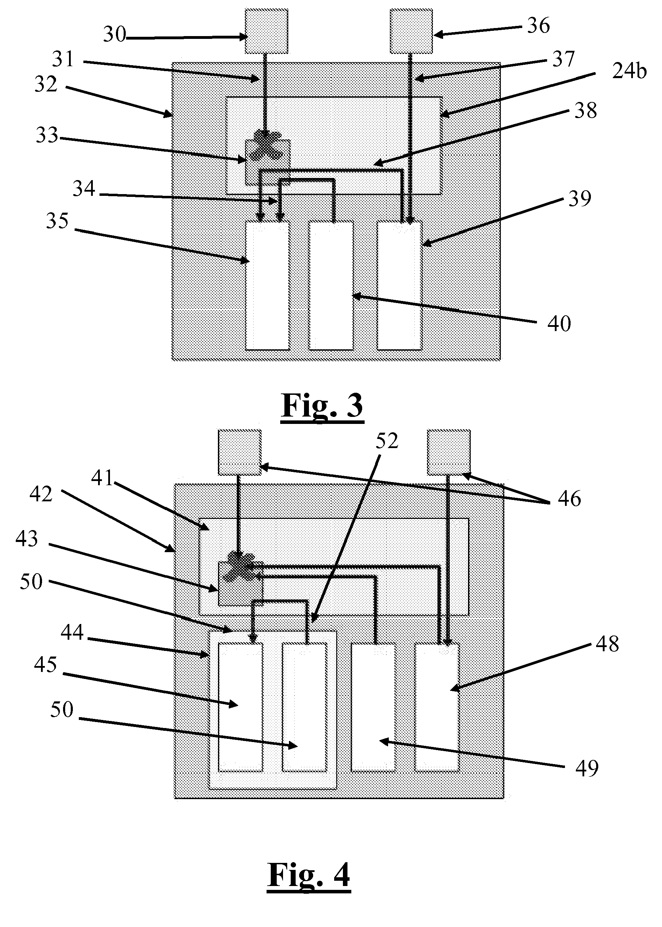

La figure 3 nous présente le fonctionnement d'un dispositif implémentant la présente invention. En plus du dispositif électronique 32, la figure met en évidence deux acteurs externes 30 et 36. Ces acteurs peuvent être des utilisateurs, ou des dispositifs électroniques communicants comme par exemple des serveurs informatique.
Dans cette figure, le dispositif contient 3 applications distinctes, l'application 35 étant une application sensible dont les accès ont été délégués à l'application d'interfaçage 39. Cette application d'interfaçage 39 peut par exemple être une interface utilisateur (UI en anglais).

Dans le cas illustré par la figure 3, un ensemble de fonctionnalités 33 selon l'invention ont été ajoutées au système d'exploitation 24b.

Ces fonctionnalités vont permettre de centraliser l'ensemble des commandes 31, 38 et 34, destinées à l'application sensible 35. Une fois ces commandes analysées, des règles de sécurisation sont appliquées. Dans l'exemple illustré ici, ces règles interdisent tout accès à l'application sensible 35 venant de 1 extérieur.

Ainsi l'acteur 30 voit sa commande 33 rejetée par l'invention 33. En revanche, la commandes 37, envoyée par l'acteur externe à l'application d'interfaçage 39 est relayée vers l'application sensible, et, étant en accord avec les règles de sécurisation, est acceptée par l'invention.

L'application de telles règles de sécurisation permet à l'application 40 d'envoyer des commandes 34 à l'application sensible.

Dans le cas d'une implémentation plus stricte en termes de sécurité, les règles de sécurisation pourraient ne laisser passer que les commandes issues de l'application d'interfaçage. Dans ce mode de réalisation, seul les commandes 37 relayée 34 pourraient accéder à l'application sensible 35. Les commandes 31 et 34 seraient refusées.

La figure 4 illustre le fonctionnement d'un dispositif 42, hébergeant un système d'exploitation 41 et quatre applications 45, 48, 49 et 50.

Les fonctionnalités 43 ajoutées au système d'exploitation selon l'invention appliquent un règle de sécurisation interdisant tout accès à l'application sécurisée 45 venant de l'extérieur du dispositif électronique.

Ainsi, les acteurs externes 46 voient leurs commandes directes rejetées.

Une seconde règle est combinée avec la précédente, et interdisant l'accès à l'application sensible 45 par toute application ne faisant pas partie du même domaine de sécurité que celui de l'application 45. La notion de domaine de sécurité est fréquemment implémentée dans les dispositifs électroniques multi application, comme par exemple dans les cartes à puce implémentant le system GP (Global Platform). Cette seconde règle empêche tout envoie de commandes depuis les applications 48 et 49. Ainsi un acteur externe qui serait parvenu a charger une application, par exemple 48, dans le dispositif, ne pourrait pas se servir de celle-ci comme passerelle pour atteindre l'application 45.

En revanche, l'application 50 aura la fonction de d'application d'interfaçage, étant la seule à répondre a toutes les règles de sécurisation.

Dans un mode préféré de réalisation de l'invention, un mécanisme permet de mètre à jours les règles de sécurisation à partir d'une source extérieure.

Dans un mode particulier de réalisation, les différentes fonctionnalités de l'invention pourront être réparties dans le dispositif électronique. Un exemple d'une telle implémentation consiste en :
- l'implémentation de l'étape de centralisation des commandes destinées à l'application sensible a protéger, à l'intérieur du système d'exploitation,
- ces commandes peuvent être envoyées à une application du dispositif électronique qui serait en charge de leur analyse,
- l'application des règles de sécurité serait faite par une autre application.

Ce modèle d'implémentation permet une très grande modularité car chacune de ces application peut avoir ces propres mécanismes de mise à jour, d'enrichissement, etc...

Ce modèle d'implémentation permet également une plus grande souplesse dans l'implémentation de l'invention en permettant d'installer chaque application en fonction des mécanismes et des capacités du dispositif.

## Revendications

1. Procédé de sécurisation des accès à une application sensible (35) hébergée dans un dispositif électronique (32), dans un système comportant ladite application sensible (35), et une application d'interfaçage (39) en charge des échanges entre ladite application sensible (35) et le monde extérieur (36, 30) **caractérisé en ce qu'**il comporte les étapes de :
- centralisation de toutes les commandes (34, 38, 31) destinées à ladite application sensible (35)
- analyse des dites commandes (34, 38, 31) destinées à ladite application sensible (35)
- application, à chacune des dites commandes (34, 38, 31) destinées à ladite application sensible (35), de au moins une règle de sécurisation

2. Procédé selon la revendication 1 **caractérisé en ce que** ladite étape de centralisation de toutes les commandes (34, 38, 31) destinées à ladite application sensible (35) se fait au niveau du système d'exploitation (24b) dudit dispositif électronique (32).

3. Procédé selon l'une des revendications 1 ou 2,
**caractérisé en ce que** ladite étape de analyse des dites commandes (34, 38, 31) destinées à ladite application sensible (35) se fait au niveau du système d'exploitation (24b) dudit dispositif électronique (32).

4. Procédé selon l'une des revendications 1 à 3,
**caractérisé en ce que** ladite étape de application, à chacune des dites commandes (34, 38, 31) destinées à ladite application sensible (35), de au moins une règle de sécurisation se fait au niveau du système d'exploitation (24b) dudit dispositif électronique (32).

5. Procédé selon l'une des revendications 1 à 4,
**caractérisé en ce que** ladite règle de sécurisation consiste en un rejet des dites commandes destinées à ladite application sensible, venant de l'extérieur dudit dispositif électronique

6. Procédé selon l'une des revendications 1 à 4,
**caractérisé en ce que** ladite règle de sécurisation consiste en un rejet des dites commandes destinées à ladite application sensible, ne venant pas d'une application faisant partie du même domaine de sécurité que ladite application sensible.

7. Procédé selon l'une des revendications 1 à 4,
**caractérisé en ce que** ladite règle de sécurisation consiste en un rejet des dites commandes destinées à ladite application sensible si leur nature ne fait pas partie d'une liste explicite enregistrée dans une mémoire dudit dispositif électronique.

8. Procédé selon l'une des revendications 1 à 4,
**caractérisé en ce que** ladite règle de sécurisation consiste en un rejet des dites commandes destinées à ladite application sensible si leur nature fait partie d'une liste enregistrée dans une mémoire dudit dispositif électronique.

9. Procédé selon l'une des revendications 1 à 8,
**caractérisé en ce que** les règles de sécurisation consistent en la combinaison de plusieurs critères de rejet des dites commandes destinées à ladite application sensible.

10. Module logiciel (33) enregistré dans une mémoire d'un dispositif électronique (32) comportant au moins une mémoire et un processeur, destiné à protéger l'accès à une application sensible (35) stockée dans une mémoire dudit dispositif électronique, **caractérisé en ce qu'**il possède des moyens pour :
- centraliser toutes les commandes (34, 38, 31) destinées à ladite application sensible (35),
- analyser, avec l'aide du processeur dudit dispositif électronique, lesdites commandes destinées à ladite application sensible,
- lire au moins une règle de sécurisation dans une mémoire dudit dispositif électronique,
- appliquer, à chacune desdites commandes destinées à ladite application sensible, ladite au moins une règle de sécurisation

11. Module logiciel selon la revendication 10,
**caractérisé en ce qu'**il est intégré au système d'exploitation (24b) dudit dispositif électronique (32).

12. Module logiciel selon l'une des revendications 10 à 11, **caractérisé en ce que** ladite règle de sécurisation consiste en un rejet des dites commandes destinées à ladite application sensible, venant de l'extérieur dudit dispositif électronique

13. Module logiciel selon l'une des revendications 10 à 11, **caractérisé en ce que** ladite règle de sécurisation consiste en un rejet des dites commandes destinées à ladite application sensible, ne venant pas d'une application faisant partie du même domaine de sécurité que ladite application sensible.

14. Module logiciel selon l'une des revendications 10 à 11, **caractérisé en ce que** ladite règle de sécurisation consiste en un rejet des dites commandes destinées à ladite application sensible si leur nature ne fait pas partie d'une liste explicite enregistrée dans une mémoire dudit dispositif électronique.

15. Module logiciel selon l'une des revendications 10 à 11, **caractérisé en ce que** ladite règle de sécurisation consiste en un rejet des dites commandes destinées à ladite application sensible si leur nature fait partie d'une liste enregistrée dans une mémoire dudit dispositif électronique.

16. Module logiciel selon l'une des revendications 10 à 11, **caractérisé en ce que** les dites règles de sécurisation consistent en la combinaison de plusieurs critères de rejet des dites commandes destinées à ladite application sensible.
